# EUROPEAN PATENT SPECIFICATION

(11) **EP 4 141 085 B1**
(45) Date of publication and mention of the grant of the patent: **10.09.2025**
(21) Application number: 21877665.6
(22) Date of filing: 06.10.2021
(51) Int. Cl.: C09J 201/06, C09J 5/00, C08G 18/20, C08G 18/22, C08G 18/24, C08G 18/38, C08G 18/73, C08G 18/79, C08G 18/50, C09J 175/08, C08G 18/10

(54) **ADHESIVE SET, FILM, BONDED BODY, AND METHOD FOR SEPARATING ADHEREND**
KLEBSTOFFSATZ, FOLIE, VERBUNDENER KÖRPER UND VERFAHREN ZUR TRENNUNG VON FÜGETEILEN
ENSEMBLE ADHÉSIF, FILM, CORPS LIÉ, ET PROCÉDÉ DE SÉPARATION D'UN ADHÉRENT

(30) Priority: 07.10.2020 JP 2020169677; 07.10.2020 JP 2020169678; 07.10.2020 JP 2020169680
(43) Date of publication of application: 01.03.2023
(73) Proprietor: Resonac Corporation, Tokyo 105-7325 (JP)
(72) Inventor: WADA, Masayuki, Tokyo 105-8518 (JP); KUMAKI, Takashi, Tokyo 105-8518 (JP); MIYAMOTO, Yuki, Tokyo 105-8518 (JP); SAKAMOTO, Keiichi, Tokyo 105-8518 (JP); SATO, Shun, Tokyo 105-8518 (JP)
(74) Representative: Berggren Oy
(86) International application number: PCT/JP2021/037006
(87) International publication number: WO 2022/075366

(56) References cited:
- EP-A1- 3 940 025
- WO-A1-2020/209268
- DE-A1- 19 733 643
- JP-A- 2001 512 762
- JP-A- 2012 530 173
- JP-A- 2015 501 244
- JP-A- 2016 089 175
- JP-A- H08 211 594
- JP-A- H08 211 594
- FURUTANI MASAHIRO ET AL: "Dismantlable Adhesives Using Cleavable Chemical Bonds Such as Disulfide Bonds", NIHON SETCHAKU GAKKAISHI = JOURNAL OF THE ADHESION SOCIETY OF JAPAN, vol. 54, no. 8, 1 August 2018 (2018-08-01), JP, pages 302 - 309, XP093069213, ISSN: 0916-4812, DOI: 10.11618/adhesion.54.302

## Description

The present disclosure relates to an adhesive set, a film, a bonded body, and an adherend separation method.

A composition exhibiting photo-fusibility, by which the composition fuses when irradiated with light, is used in various use applications. For example, in Patent Literature 1, an image forming apparatus including a recording member that has a composition exhibiting photo-fusibility is disclosed.

Patent Literature 1: JP H11-190883 A
EP 3 940 025 A1 represents prior art pursuant to Article 54 (3) EPC and discloses an optically softening resin composition, a method for producing a softened product of an optically softening resin composition, a curable resin composition and a cured product of the same, and a patterned film and a method for producing the same.
DE 19 733 643 A1 discloses soluble adhesives.
Journal of the Adhesion Society of Japan, vol. 54, no. 8, pages 302 - 309 discloses dismantlable adhesives using cleavable chemical bonds such as disulfide bonds.
JP H08 211594 A discloses an original plate of a waterless planographic printing plate.

It is an object of the present disclosure to provide an adhesive set, with which a cured product of an adhesive composition exhibiting photo-fusibility can be obtained.

An aspect of the present disclosure relates to an adhesive set. This adhesive set includes a main agent containing a compound having two or more isocyanate groups; and a curing agent containing a compound having two or more hydroxyl groups. At least one of the compound having two or more isocyanate groups and the compound having two or more hydroxyl groups has a disulfide bond in a molecule. At least one of the main agent and the curing agent further contains a curing catalyst. At least one of the main agent and the curing agent further contains a photoradical generator. According to such an adhesive set, by mixing a main agent and a curing agent, an adhesive composition including the main agent and the curing agent can be obtained, and by curing the adhesive composition, a cured product of the adhesive composition can be obtained. Here, it is speculated that formation of a cured product of the adhesive composition is exhibited as a result of a reaction between the isocyanate groups in the compound having two or more isocyanate groups of the main agent and the hydroxyl groups in the compound having two or more hydroxyl groups of the curing agent in the adhesive composition, which leads to an increase in the molecular weight.

A cured product of the adhesive composition exhibits photo-fusibility induced by irradiation with light. The inventors of the present invention consider the reason for exhibiting such photo-fusibility as follows. A cured product of the adhesive composition is a reaction product between a compound having isocyanate groups and a compound having hydroxyl groups and is formed as a result of a reaction between the compound having isocyanate groups and the compound having hydroxyl groups, which leads to an increase in the molecular weight (polymerization). Therefore, the cured product of the adhesive composition may contain a polymer containing a monomer unit having isocyanate groups and a monomer unit having hydroxyl groups. At this time, since at least one of the compound (monomer unit) having isocyanate groups and the compound (monomer unit) having hydroxyl groups has a disulfide bond in the molecule, the polymer has disulfide bonds in the molecule. Here, when the cured product of the adhesive composition is irradiated with light, the disulfide bonds in the polymer are decomposed (cleaved), and thiyl radicals are generated. At this time, it is conceived that when a photoradical generator is present in the cured product of the adhesive composition, a thiyl radical and the photoradical generator react with each other, the molecular weight of the cured product of the adhesive composition is reduced, and the cured product of the adhesive composition is fused. This reaction is said to be an irreversible reaction. Incidentally, a reaction mechanism that does not go through a cleaving step in which the molecular weight of the compound having a disulfide bond itself is reduced, by which a photoinduced radical caused by a photoradical generator directly reacts with a disulfide bond, formation of a photoinduced radical-thioether bond and generation of a thiyl radical occur, and the thiyl radical reacts with another photoinduced radical, is also conceivable.

An embodiment of the curing catalyst is a tin-based curing catalyst. When a tin-based curing catalyst is used as the curing catalyst, the time required until the adhesive composition is cured can be lengthened. As the curing time for the adhesive composition becomes long, the working life becomes longer, and workability can be further enhanced. Another embodiment of the curing catalyst is a zirconium-based curing catalyst. When a zirconium-based curing catalyst is used as the curing catalyst, it is possible to prepare an adhesive composition exhibiting higher adhesive strength.

Another aspect of the present disclosure relates to a film. An aspect of the film contains a cured product of the adhesive composition including the main agent and the curing agent in the above-described adhesive set. Another aspect of the film contains a polymer containing a monomer unit having two or more isocyanate groups and a monomer unit having two or more hydroxyl groups; and a photoradical generator. With regard to another aspect of the film, at least one of the monomer unit having two or more isocyanate groups and the monomer unit having two or more hydroxyl groups has a disulfide bond in a molecule.

These films contain a cured product of an adhesive composition containing a main agent and a cured agent, or a polymer including a monomer unit having two or more isocyanate groups and a monomer unit having two or more hydroxyl groups. At this time, at least one of the compound (monomer unit) having isocyanate groups and the compound (monomer unit) having hydroxyl groups has a disulfide bond in the molecule. In addition, these films contain a photoradical generator. Therefore, these films can exhibit photo-fusibility by being irradiated with light.

Still another aspect of the present disclosure relates to a bonded body. This bonded body includes a first adherend, a second adherend, and an adhesive layer that adheres the first adherend and the second adherend to each other. The adhesive layer contains a cured product of the adhesive composition containing the main agent and the curing agent in the above-described adhesive set.

Still another aspect of the present disclosure relates to an adherend separation method for separating an adherend from the above-described bonded body. This adherend separation method includes irradiating the adhesive layer of the bonded body with light to separate the first adherend and the second adherend.

### Advantageous Effects of Invention

According to the present disclosure, there is provided an adhesive set, with which a cured product of an adhesive composition that exhibits photo-fusibility can be obtained. With the adhesive sets of some embodiments, the time required until the adhesive composition is cured can be made longer. Furthermore, with the adhesive sets of some embodiments, an adhesive composition exhibiting higher adhesive strength can be prepared. Furthermore, according to the present disclosure, a film exhibiting photo-fusibility is provided. In addition, according to the present disclosure, there are provided a bonded body obtained by using such an adhesive set, and an adherend separation method for separating an adherend from a bonded body.

### Description of Embodiments

In the following description, embodiments of the present disclosure will be described. However, the present disclosure is not intended to be limited to the following embodiments.

In the present specification, a numerical value range expressed by using the term "to" represents a range including the numerical values described before and after the term "to" as the minimum value and the maximum value, respectively. With regard to a numerical value range described stepwise in the present specification, the upper limit value or lower limit value of a numerical value range of a certain stage may be replaced with the upper limit value or lower limit value of a numerical value range of another stage. Furthermore, according to the present specification, the term "(meth)acrylate" means at least one of an acrylate and a methacrylate corresponding thereto. The same also applies to other similar expressions such as "(meth)acryloyl". Furthermore, with regard to the expression "A or B", any one of A and B may be included, or both of them may be included. Furthermore, with regard to the materials that will be mentioned below as examples, unless particularly stated otherwise, one kind thereof may be used alone, or two or more kinds thereof may be used in combination. In a case where a plurality of substances corresponding to each component is present in the composition, unless particularly stated otherwise, the content of each component in a composition means the total amount of the plurality of substances present in the composition.

### [Adhesive set]

An adhesive set according to an embodiment includes: a main agent containing a compound having two or more isocyanate groups; and a curing agent containing a compound having two or more hydroxyl groups. With the adhesive set of the present embodiment, an adhesive composition containing a main agent and a curing agent can be obtained by mixing the main agent and the curing agent, and by curing the adhesive composition, a cured product of the adhesive composition can be obtained.

The main agent contains a compound having two or more isocyanate groups (hereinafter, may be referred to as "component (A)"). The curing agent contains a compound having two or more hydroxyl groups (hereinafter, may be referred to as "component (B)"). From the viewpoint of exhibiting photo-fusibility, at least one of the component (A) and the component (B) has a disulfide bond in the molecule. At least one of the main agent and the curing agent further contains a curing catalyst (hereinafter, may be referred to as "component (C)"). At least one of the main agent and the curing agent further contains a photoradical generator (hereinafter, may be referred to as "component (D)"). At least one of the main agent and the curing agent may further contain any one of a sensitizer and the like. Hereinafter, each component will be described.

### Component (A): Compound having two or more isocyanate groups

The component (A) may be a compound having two or more isocyanate groups and having a disulfide bond (hereinafter, may be referred to as "component (A1)"), or a compound having two or more isocyanate groups and having no disulfide bond (hereinafter, may be referred to as "component (A2)").

The component (A1) is not particularly limited as long as it has two or more isocyanate groups and has a disulfide bond; however, since the molecular weight of the component (A1) is decreased by being irradiated with light, the component (A1) may be a high-molecular weight component of a polymer or an oligomer. Regarding the component (A1), one kind thereof may be used alone, or two or more kinds thereof may be used in combination. It is preferable that the component (A1) has a plurality of (two or more) disulfide groups in the molecule.

The component (A1) may be, for example, a copolymer obtainable by reacting a compound having a disulfide bond and having a functional group (hereinafter, may be referred to as "component (A1-a)") with a compound having an isocyanate group and a substituent capable of reacting with a functional group (hereinafter, may be referred to as "component (A1-b)"), in other words, a reaction product of the component (A1-a) and the component (A1-b), that is, a copolymer containing a monomer unit of the component (A1-a) and a monomer unit of the component (A1-b).

With regard to the component (A1-a), any compound having a disulfide bond and having a functional group can be used without particular limitation. Here, the functional group for the component (A1-a) may be, for example, a thiol group, a carboxy group, an amino group, or the like. The functional group for the component (A1-a) may be, for example, at least one selected from the group consisting of a thiol group and a carboxy group. The number of functional groups of the component (A1-a) may be two or more, from the viewpoint of increasing the molecular weight. On the other hand, as the degree of crosslinking of the component (A) is decreased, when a cured product of the adhesive composition is irradiated with light, the cured product tends to be easily fused, and therefore, it is preferable to use a compound in which the number of functional groups is two as the component (A1-a), while in the case of using a plurality of the compounds having different numbers of functional groups, it is preferable to increase the use proportion of a compound in which the number of functional groups is two.

Examples of the component (A1-a) include THIOKOL LP series (a dithiol having a disulfide bond, manufactured by Toray Fine Chemicals Co., Ltd.), 3,3'-dithiodipropionic acid (manufactured by Tokyo Chemical Industry Co., Ltd.), and the like. Regarding these components (A1-a), one kind thereof may be used alone, or two or more kinds thereof may be used in combination.

With regard to the component (A1-b), any compound having an isocyanate group and having a substituent capable of reacting with a functional group can be used without particular limitation. Here, examples of the substituent for the component (A1-b) include an isocyanate group, a (meth)acryloyl group, and an aldehyde group. The substituent for the component (A1-b) may be, for example, an isocyanate group. Regarding the component (A1-b), from the viewpoint of reacting with a functional group of the component (A1-a) to produce a compound having an isocyanate group, the component (A1-b) may be a compound in which the number of isocyanate groups is one and the number of substituents is one, or may be a compound in which the number of isocyanate groups is two.

Examples of the component (A1-b) include aromatic polyisocyanates such as diphenylmethane diisocyanate, dimethyldiphenylmethane diisocyanate, tolylene diisocyanate, xylylene diisocyanate, and p-phenylene diisocyanate; aliphatic polyisocyanates such as hexamethylene diisocyanate; and alicyclic polyisocyanates such as dicyclohexylmethane diisocyanate and isophorone diisocyanate. Regarding these components (A1-b), one kind thereof may be used alone, or two or more kinds thereof may be used in combination.

A suitable combination of the component (A1-a) and the component (A1-b) may be, for example, a combination of a compound having a disulfide bond and having two thiol groups and a compound having two isocyanate groups.

In a case where a copolymer as the component (A1) is obtained by reacting the component (A1-a) with the component (A1-b), the reaction proportions of these components can be appropriately adjusted such that the component (A1) thus obtainable has two or more isocyanate groups, based on the functional group equivalent of the component (A1-a) and the substituent equivalent of the component (A1-b). The reaction between the component (A1-a) and the component (A1-b) may be carried out while heating. The reaction temperature may be, for example, 0°C to 200°C, and the reaction time may be, for example, 0.1 to 240 hours.

In a case where the component (A1-a) and the component (A1-b) are reacted with each other, a curing catalyst (hereinafter, may be referred to as "component (A1-c)") may be used as necessary. The component (A1-c) can be arbitrarily selected according to the type of the functional group of the component (A1-a) and the type of the substituent of the component (A1-b). In a case where a compound having a thiol group as a functional group as the component (A1-a) is reacted with a compound having an isocyanate group as a substituent as the component (A1-b), the component (A1-c) may be, for example, a tin-based curing catalyst or an amine-based curing catalyst.

The tin-based curing catalyst may be, for example, a tin compound having tin and an organic group (an alkyl group, a carboxylate group, or the like). Examples of the tin-based curing catalyst include dibutyltin dilaurate, dibutyltin dichloride, dibutyltin oxide, dibutyltin dibromide, dibutyltin dimaleate, dioctyltin dilaurate, dibutyltin diacetate, dibutyltin sulfide, bis(tributyltin) sulfide, bis(tributyltin) oxide, tributyltin acetate, triethyltin ethoxide, tributyltin ethoxide, dioctyltin oxide, tributyltin chloride, tributyltin trichloroacetate, tin 2-ethylhexanoate, and the like.

The amine-based curing catalyst may be, for example, a (tertiary) amine compound, an imidazole compound, or the like. Examples of the amine-based curing catalyst include triethylamine, triethylenediamine (TEDA), 1,8-diazabicyclo[5.4.0]undecene-7 (DBU), 1,5-diazabicyclo[4.3.0]nonene-5 (DBN), 1-isobutyl-2-methylimidazole (IBM), and the like.

The content of the component (A1-c) may be 0.005% to 10% by mass, 0.01% to 5% by mass, or 0.02% to 3% by mass, based on the sum of the component (A1-a) and the component (A1-b).

The molecular weight or weight average molecular weight of the component (A1) may be 200 to 10000000, 1000 to 2000000, or 2500 to 1000000. Incidentally, the weight average molecular weight is a polystyrene-equivalent value obtained by a gel permeation chromatography method (GPC) using a calibration curve based on polystyrene standards.

Regarding the component (A2), any compound having two or more isocyanate groups and having no disulfide bond can be used without particular limitation. For the component (A2), compounds similar to the compounds for the component (A1-b) can be mentioned as examples. The component (A2) may be an oligomer of a compound having two or more isocyanate groups. Examples of such an oligomer include an oligomer of an aliphatic diisocyanate such as hexamethylene diisocyanate (HDI); and an oligomer of an aromatic diisocyanate such as diphenylmethane diisocyanate (MDI). The oligomer of an aliphatic diisocyanate may be, for example, a trimer (an isocyanurate form, a biuret form, or an adduct form of trimethylolpropane (TMP)) of an aliphatic diisocyanate.

The content of the component (A) may be, for example, 0.5% by mass or more, 1% by mass or more, 5% by mass or more, or 10% by mass or more, and may be 80% by mass or less, 70% by mass or less, 60% by mass or less, or 55% by mass or less, based on the total amount of the main agent and the curing agent.

### Component (B): Compound having two or more hydroxyl groups

The component (B) may be a compound having two or more hydroxyl groups and having a disulfide bond (hereinafter, may be referred to as "component (B1)") or a compound having two or more hydroxyl groups and having no disulfide bond (hereinafter, may be referred to as "component (B2)").

The component (B1) is not particularly limited as long as it has two or more hydroxyl groups and has a disulfide bond; however, since the molecular weight of the component (B1) is decreased by being irradiated with light, the component (B1) may be a high-molecular weight component of a polymer or an oligomer. Regarding the component (B1), one kind thereof may be used alone, or two or more kinds thereof may be used in combination. It is preferable that the component (B1) has a plurality of (two or more) disulfide bonds in the molecule.

The component (B1) may be, for example, a copolymer obtainable by reacting a compound having a disulfide bond and having a functional group (hereinafter, may be referred to as "component (B1-a)") with a compound having a hydroxyl group and a substituent capable of reacting with a functional group (hereinafter, may be referred to as "component (B1-b)"), in other words, a reaction product of the component (B1-a) and the component (B1-b), that is, a copolymer containing a monomer unit of the component (B1-a) and a monomer unit of the component (B1-b).

Regarding the component (B1-a), the compounds mentioned as examples of the component (A1-a) can be mentioned as examples.

Regarding the component (B1-b), any compound having a hydroxyl group and having a substituent capable of reacting with a functional group can be used without any particular limitation. Here, examples of the substituent for the component (B1-b) include a group containing a cyclic ether (for example, a glycidyl group and the like), a (meth)acryloyl group, an aldehyde group, and the like. The substituent for the component (B1-b) may be, for example, a (meth)acryloyl group. Regarding the component (B1-b), from the viewpoint of reacting with the functional group of the component (B1-b) to produce a compound having a hydroxyl group, the component (B1-b) may be a compound in which the number of hydroxyl groups is one and the number of the substituent is one, or may be a compound in which the number of hydroxyl groups is one and the number of (meth)acryloyl groups is one.

Examples of the component (B1-b) include (meth)acrylates having a hydroxyl group, such as 2-hydroxyethyl (meth)acrylate, 1-hydroxyethyl (meth)acrylate, 2-hydroxypropyl (meth)acrylate, 3-hydroxypropyl (meth)acrylate, 1-hydroxypropyl (meth)acrylate, 4-hydroxybutyl (meth)acrylate, 3-hydroxybutyl (meth)acrylate, 2-hydroxybutyl (meth)acrylate, and 1-hydroxybutyl (meth)acrylate. Regarding these components (B1-b), one kind thereof may be used alone, or two or more kinds thereof may be used in combination.

A suitable combination of the component (B1-a) and the component (B1-b) may be, for example, a combination of a compound having a disulfide bond and having two thiol groups and a compound having one hydroxyl group and having one (meth)acryloyl group.

In a case in which the component (B1-a) and the component (B1-b) are reacted with each other to obtain a copolymer as the component (B1), the reaction proportions of these components can be appropriately adjusted such that the component (B1) thus obtainable has two or more hydroxyl groups, based on the functional group equivalent of the component (B1-a) and the substituent equivalent of the component (B1-b). The reaction between the component (B1-a) and the component (B1-b) may be carried out while heating. The reaction temperature may be, for example, 0°C to 200°C, and the reaction time may be, for example, 0.1 to 240 hours.

In a case in which the component (B1-a) and the component (B1-b) are reacted with each other, a curing catalyst (hereinafter, may be referred to as "component (B1-c)") may be used as necessary. The component (B1-c) can be arbitrarily selected according to the type of the functional group of the component (B1-a) and the type of the substituent of the component (B1-b). In a case where a compound having a thiol group as a functional group as the component (B1-a) is reacted with a compound having a (meth)acryloyl group as a substituent as the component (B1-b), the component (B1-c) may be, for example, a tin-based curing catalyst or an amine-based curing catalyst. Regarding the tin-based curing catalyst and the amine-based curing catalyst, curing catalysts similar to the tin-based curing catalysts and the amine-based curing catalysts for the component (A1-c) may be mentioned as examples.

The content of the component (B1-c) may be 0.005% to 10% by mass, 0.01% to 5% by mass, or 0.02% to 3% by mass, based on the sum of the component (B1-a) and the component (B1-b).

The molecular weight or weight average molecular weight of the component (B1) may be 200 to 10000000, 1000 to 2000000, or 2500 to 1000000. Incidentally, the weight average molecular weight is a polystyrene-equivalent value obtained by a gel permeation chromatography method (GPC) using a calibration curve based on polystyrene standards.

Regarding the component (B2), any compound having two or more hydroxyl groups and having no disulfide bond can be used without particular limitation. Examples of the component (B2) include a polyester polyol, a polyether polyol, a polyacrylate polyol, a polycarbonate polyol, a polysiloxane polyol, a polyisoprene polyol, a polyolefin polyol, and the like. Regarding the component (B2), one kind thereof may be used alone, or two or more kinds thereof may be used in combination.

The content of the component (B) may be, for example, 20% by mass or more, 25% by mass or more, 30% by mass or more, or 35% by mass or more, and may be 95% by mass or less, 92% by mass or less, 90% by mass or less, or 88% by mass or less, based on the total amount of the main agent and the curing agent.

At least one of the component (A) and the component (B) contains a compound having a disulfide bond in the molecule, from the viewpoint of exhibiting photo-fusibility. That is, the adhesive set includes at least one compound selected from the group consisting of component (A1) as the component (A) and component (B1) as the component (B). The content (total amount) of the component (A1) and the component (B1) may be 50% by mass or more, 60% by mass or more, 70% by mass or more, or 75% by mass or more, and may be 99% by mass or less, 98% by mass or less, 97% by mass or less, or 96% by mass or less, based on the total amount of the main agent and the curing agent.

### Component (C): Curing catalyst

Component (C) is a catalyst for promoting a reaction between the component (A) and the component (B). The component (C) may be contained in at least one of the main agent and the curing agent; however, from the viewpoints of curing stability and storage stability, it is preferable that the component (C) is contained in the curing agent. Examples of the component (C) include a tin-based curing catalyst, an amine-based curing catalyst, a zirconium-based curing catalyst, and the like. Regarding the component (C), one kind thereof may be used alone, or two or more kinds thereof may be used in combination.

Regarding the tin-based curing catalyst, curing catalysts similar to the tin-based curing catalysts for the component (A1-c) can be mentioned as examples. By using a tin-based curing catalyst as the component (C), the curing time for the adhesive composition can be made longer. As the curing time for the adhesive composition becomes long, the working time becomes longer, and workability can be further enhanced.

Regarding the amine-based curing catalyst, curing catalysts similar to the amine-based curing catalysts for the component (A1-c) can be mentioned as examples.

The zirconium-based curing catalyst may be, for example, a zirconium compound having zirconium and an organic group (an alkyl group, a carboxylate group, or the like). Examples of the zirconium-based curing catalyst include tetra-normal-propyl zirconate, tetra-normal-butyl zirconate, zirconium tetraacetylacetonate, zirconium tributoxymonoacetylacetonate, zirconium dibutoxybis(ethylacetoacetate), zirconium octoate compound, and the like. By using a zirconium-based curing catalyst as the component (C), an adhesive composition exhibiting higher adhesive strength can be prepared.

The content of the component (C) may be 0.001% by mass or more, 0.01% by mass or more, 0.05% by mass or more, or 0.1% by mass or more, and may be 10% by mass or less, 5% by mass or less, 3% by mass or less, or 1% by mass or less, based on the total amount of the main agent and the curing agent.

### Component (D): Photoradical generator

Component (D) may be a component that reacts with a generated thiyl radical, or a component that generates a photoinduced radical, when a cured product of the adhesive composition is irradiated with light. The component (D) may be contained in at least one of the main agent and the curing agent; however, from the viewpoints of curing stability and storage stability, it is preferable that the component (D) is contained in the main agent.

Examples of the photoradical generator include an intramolecular cleavage type photoradical polymerization initiator, a hydrogen abstraction type photoradical polymerization initiator, and the like. Examples of the intramolecular cleavage type photoradical polymerization initiator include a benzyl ketal-based photoradical polymerization initiator; an α-hydroxyacetophenone-based photoradical polymerization initiator; a benzoin-based photoradical polymerization initiator; an aminoacetophenone-based photoradical polymerization initiator; an oxime ketone-based photoradical polymerization initiator; an acylphosphine oxide-based photoradical polymerization initiator; a titanocene-based photoradical polymerization initiator; an S-phenyl thiobenzoate polymerization initiator; and high-molecular weight derivatives of these. Examples of the hydrogen abstraction type photoradical polymerization initiator include a benzophenone-based photoradical polymerization initiator, a thioxanthone-based photoradical polymerization initiator, an anthraquinone-based photoradical polymerization initiator, and the like.

The content of the component (D) may be 0.1% by mass or more, 1% by mass or more, 3% by mass or more, or 5% by mass or more, and may be 50% by mass or less, 40% by mass or less, 30% by mass or less, or 20% by mass or less, based on the total amount of the main agent and the curing agent.

At least one of the main agent and the curing agent may further contain a sensitizer and the like.

The sensitizer is not particularly limited, and a known triplet sensitizer can be used. Examples of the sensitizer include a benzoic acid-based photosensitizer, an amine-based photosensitizer, and the like. Regarding the sensitizers, one kind thereof may be used alone, or two or more kinds thereof may be used in combination.

The content of the sensitizer may be 0.1% to 10% by mass, 0.5% to 8% by mass, or 1% to 5% by mass, based on the total amount of the main agent and the curing agent.

At least one of the main agent and the curing agent may further contain, in addition to the above-described components (A) to (D) and a sensitizer, for example, additives such as an adhesion enhancing agent such as a coupling agent, a polymerization inhibitor, a photo stabilizer, an antifoaming agent, a filler, a chain transfer agent, a thixotropic agent, a flame retardant, a mold release agent, a surfactant, a lubricating agent, and an antistatic agent as other components. Regarding these additives, any known ones can be used. The content (total amount) of the other components may be 0.01% to 20% by mass, or 0.1% to 10% by mass, based on the total amount of the main agent and the curing agent.

In a case where the main agent and the curing agent are mixed, the equivalent ratio (molar ratio) of the isocyanate group of the component (A) with respect to the hydroxyl group of the component (B) (NCO group / OH group) may be, for example, 0.76 to 1.3.

With regard to the adhesive set according to the present embodiment, an adhesive composition can be prepared by mixing the main agent and the curing agent. The temperature and time at the time of mixing the main agent and the curing agent may be, for example, 10°C to 35°C for 0.1 to 60 minutes.

Examples of the method of mixing the main agent and the curing agent include a method of manually mixing the agents by using a spatula or the like; a method of mixing the agents by hand-coating using an ordinary caulking gun; a method of mixing the agents by using a quantitative pump (for example, a gear pump, a plunger pump, or the like) and a throttle valve in combination for feeding raw material liquids and using a mechanical rotary mixer, a static mixer, or the like.

The prepared adhesive composition can form a cured product of the adhesive composition by aging (curing) and can act as an adhesive layer that adheres adherends to each other. The conditions for curing the adhesive composition (aging conditions) may be, for example, 10°C to 35°C and 30% to 60%RH (relative humidity) for 0.1 to 7 days.

A cured product of the adhesive composition has a property by which disulfide bonds (-S-S-) in the cured product are cut by irradiation with light, and the molecular weight of the compound having disulfide bonds is decreased so that the compound is fused. By utilizing such a property, the cured product of the adhesive composition can be applied to, for example, a use application of a photoresist agent for photolithography. The cured products of these adhesive compositions can be patterned by irradiation with light (exposure), and after light irradiation (exposure), for example, developing can be achieved by washing with water. The cured product of the adhesive composition can be suitably used for forming a patterned film. Furthermore, the adhesive composition including a main agent and a curing agent has adhesiveness, and the cured product of the adhesive composition has photo-fusibility induced by light irradiation. Therefore, the adhesive composition can also be used as an adhesive having repairability.

The light for light irradiation is not particularly limited; however, for example, the light may be ultraviolet radiation or visible light. The wavelength of the light for light irradiation may be 150 to 830 nm. Light irradiation can be carried out by, for example, using a light irradiation apparatus under the conditions of an irradiation amount of 100 mJ/cm² or greater. Incidentally, the irradiation amount means a product of illuminance and irradiation time (seconds). Furthermore, examples of a light source for irradiating ultraviolet radiation or visible light include a low-pressure mercury lamp, a medium-pressure mercury lamp, a high-pressure mercury lamp, a metal halide lamp, an LED lamp, and the like. Light irradiation may be carried out directly on the cured product of the adhesive composition or may be carried out with glass or the like interposed therebetween.

Light irradiation of the cured product of the adhesive composition may be carried out while heating. The heating conditions may be, for example, 40°C to 200°C.

### [Film]

A film according to an embodiment is a film containing a cured product of the adhesive composition containing a main agent and a curing agent in the above-described adhesive set. This film can be said to be a film containing a polymer containing a monomer unit having two or more isocyanate groups and a monomer unit having two or more hydroxyl groups and a photoradical generator, in which at least one of the monomer unit having two or more isocyanate groups and the monomer unit having two or more hydroxyl groups contains a monomer unit having a disulfide bond in the molecule.

The film can be obtained by, for example, forming an adhesive composition containing a main agent and a curing agent into a film shape to produce an adhesive film, and aging (curing) the obtained adhesive film under the conditions similar to the above-described conditions. Here, the adhesive film contains a cured product of the adhesive composition containing a main agent and a curing agent in the above-described adhesive set.

The thickness of the film is not particularly limited; however, for example, the thickness may be 5 to 300 µm, 20 to 200 µm, or 60 to 180 µm.

### [Bonded body]

A bonded body according to an embodiment includes a first adherend, a second adherend, and an adhesive layer that adheres the first adherend and the second adherend to each other. The adhesive layer contains a cured product of an adhesive composition containing the main agent and the curing agent in the adhesive set described above.

Examples of the first adherend and the second adherend include plastics such as a polyolefin resin, a polyamide resin, an ABS (acrylonitrile-butadiene-styrene) resin, a PC (polycarbonate) resin, a PET (polyethylene terephthalate) resin, a PPS (polyphenylene sulfide) resin, and an acrylic resin; inorganic materials such as simple metal substances (aluminum, copper, nickel, chromium, and the like) or alloys of these metals, glass, and a silicon wafer; wood material; and rubber. Furthermore, as the first adherend and the second adherend, materials in which the above-described plastics and the above-described inorganic materials are compositized may also be mentioned.

The bonded body can be obtained by a method including sticking a first adherend and a second adherend together, with an adhesive composition containing a main agent and a curing agent interposed therebetween. The temperature and time at the time of mixing the main agent and the curing agent in the adhesive set, the conditions for curing the adhesive composition, and the like may be as described above.

### [Adherend separation method]

An adherend separation method according to an embodiment includes irradiating an adhesive layer of a bonded body with light to separate a first adherend and a second adherend. Since the adhesive layer contains a cured product of an adhesive composition containing the main agent and the curing agent in the adhesive set described above, the cured product of the adhesive composition can be fused by irradiating the cured product with light, and the adherends can be easily separated from each other.

With regard to the adherend separation method, the type of light, the light source, and the like at the time of irradiating light may be as described above.

### Examples

Hereinafter, the present disclosure will be more specifically described by way of Examples. However, the present disclosure is not intended to be limited to these Examples.

### [Preparation of raw materials]

### (Synthesis of raw materials)

### · Production Example 1: Compound having two or more isocyanate groups and having a disulfide bond

400 g of THIOKOL LP-55 was introduced into a flask, nitrogen was introduced therein, and the temperature was increased to 95°C for 15 minutes while stirring the mixture. Pressure was lowered (gauge pressure 0.1 MPa) while maintaining the temperature at 95°C, and the mixture was stirred for 2 hours and 15 minutes to perform a dehydration treatment. After the dehydration treatment, the mixture was cooled to room temperature (25°C). In a nitrogen atmosphere, 36.6 g of HDI (hexamethylene diisocyanate, manufactured by Tosoh Corporation) was added into the flask at room temperature (25°C), subsequently 138 mg of triethylamine as a catalyst was added thereto, and stirring of the mixed liquid was started. After the catalyst was added, the temperature of the mixed liquid was raised to 40°C due to the reaction heat. With regard to the reaction, the decrease rate of isocyanate groups of HDI was traced by measuring the infrared absorption spectrum, and three hours after a predetermined decrease rate was reached, stirring was stopped. The reaction product after stopping the stirring was designated as a compound having two or more isocyanate groups and having a disulfide bond of Production Example 1. The NCO content (%) of the compound of Production Example 1 was measured, and the NCO content was 2.16% (theoretical value: 2.09%).

### · Production Example 2: Compound having two or more hydroxyl groups and having a disulfide bond

367.8 g of THIOKOL LP-55 (a dithiol having a disulfide bond, manufactured by Toray Fine Chemicals Co., Ltd.) and 23.2 g of HEA (hydroxyethyl acrylate, manufactured by NIPPON SHOKUBAI CO., LTD.) were introduced into a flask. The temperature was increased while the mixture was stirred, and DBU (1,8-diazabicyclo[5.4.0]undecene-7, manufactured by San-Apro Ltd.) was added thereto. Subsequently, the temperature was raised to 90°C, and the mixture was stirred for 4 hours and 15 minutes at 90°C. The reaction product after stirring was designated as a compound having two or more hydroxyl groups and having a disulfide bond of Production Example 2. The hydroxyl group value of the compound of Production Example 2 was measured, and the hydroxyl group value was 25.7 mg/KOH g (theoretical value: 28.7 mg/KOH g).

### (Preparation of raw materials)

(A) Compound having two or more isocyanate groups
   (A1) Compound having two or more isocyanate groups and having a disulfide compound
      A1-1: Compound of Production Example 1
   (A2) Compound having two or more isocyanate groups and having no disulfide bond
      A2-1: HDI (hexamethylene diisocyanate, manufactured by Tosoh Corporation)
      A2-2: SUMIDUR N3300 (hexamethylene diisocyanate type isocyanurate, manufactured by Sumika Covestro Urethane Co., Ltd.)
(B) Compound having two or more hydroxyl groups
   (B1) Compound having two or more hydroxyl groups and having a disulfide bond
   B1-1: Compound of Production Example 2
(C) Curing catalyst
   (C1) Amine-based curing catalyst
      C1-1: DBU (1,8-diazabicyclo[5.4.0]undecene-7, manufactured by San-Apro Ltd.)
      C1-2: TEDA L-33 (dipropylene glycol solution of triethylenediamine (TEDA) (33% by mass of triethylenediamine and 67% by mass of dipropylene glycol), manufactured by Tosoh Corporation)
      C1-3: TEXNOL IBM-12 (1-isobutyl-2-methylimidazole, manufactured by NIPPON NYUKAZAI CO., LTD.)
   (C2) Tin-based curing catalyst
      C2-1: L101-1 (dibutyltin dilaurate, manufactured by Tokyo Fine Chemical CO., LTD.)
   (C3) Zirconium-based curing catalyst
      C3-1: ZC-162 (zirconium tetraacetylacetonate, manufactured by Matsumoto Fine Chemical Co., Ltd.)
(D) Photoradical generator
   D-1: Omnirad 651 (benzyl ketal, manufactured by IGM Resins B.V.)

### (Examples 1-1 to 1-6, Examples 2-1 to 2-4, and Examples 3-1 to 3-10)

### [Production of adhesive set]

### (Main agent)

Component (A) and component (D) of the types and proportions (unit: parts by mass) shown in Table 1, Table 2, and Table 3 were stirred at a rate of 2000 rotations/min for 90 seconds by using a rotary and revolutionary stirring apparatus (AWATORI RENTARO AR-250, manufactured by THINKY CORPORATION), and then the mixture was heated at 70°C for 30 minutes. After cooling the mixture, the mixture was further stirred at a rate of 2000 rotations/min for 90 seconds to obtain a main agent.

### (Curing agent)

Component (B) and component (C) of the types and proportions (unit: parts by mass) shown in Table 1, Table 2, and Table 3 were mixed to obtain a curing agent.

### [Checking of curability of adhesive composition]

A produced main agent and a produced curing agent were stirred for one minute by using a spatula, subsequently the mixture was left to stand for 24 hours or longer at room temperature (25°C), and the presence or absence of exhibition of curability was checked by visual inspection. The results are shown in Table 1, Table 2, and Table 3.

[Checking of photo-fusibility of cured product of adhesive composition]

A produced main agent and a produced curing agent were stirred for one minute by using a spatula, subsequently the mixture was left to stand for 24 hours or longer at room temperature (25°C), and a cured product of an adhesive composition was obtained. A photo-fusibility test was carried out by using the obtained cured product of the adhesive composition. Incidentally, in the photo-fusibility test, in order to eliminate the influence of oxygen, the cured product of the adhesive composition was sandwiched between slide glasses, and then irradiation with light was performed. More specifically, 0.02 g of the cured product of the adhesive composition was disposed on a slide glass, and the cured product was sandwiched with another sheet of slide glass to obtain a test sample. The cured product of the adhesive composition of the test sample was irradiated with an LED (365 nm, illuminance: 600 mW/cm²) for 80 seconds (cumulative light amount: about 48000 mJ/cm²). After irradiation, the slide glasses were removed, and the presence or absence of a liquid component was checked by visual inspection. When a liquid component is observed, it means that the cured product has photo-fusibility. The results are shown in Table 1, Table 2, and Table 3.

**Table 1**

| | | | | Exam. 1-1 | Exam. 1-2 | Exam. 1-3 | Exam. 1-4 | Exam. 1-5 | Exam. 1-6 |
|---|---|---|---|---|---|---|---|---|---|
| Main agent | (A) | (A1) | A1-1 | 6.33 | - | - | 40.45 | 27.98 | 40.12 |
| | | (A2) | A2-1 | - | 3.09 | 1.79 | - | - | - |
| | | | A2-2 | - | 1.33 | 4.17 | - | 3.11 | - |
| | (D) | | D-1 | 9.97 | 9.97 | 9.97 | 19.96 | 9.98 | 19.80 |
| Curing agent | (B) | (B1) | B1-1 | 83.40 | 85.31 | 83.77 | 39.39 | 58.74 | 39.08 |
| | (C) | (C1) | C1-1 | 0.30 | 0.30 | 0.30 | 0.20 | 0.20 | - |
| | | | C1-2 | - | - | - | - | - | 1.00 |
| Presence or absence of exhibition of curability | | | | Present | Present | Present | Present | Present | Present |
| Presence or absence of liquid component upon light irradiation | | | | Present | Present | Present | Present | Present | Present |

**Table 2**

| | | | | Exam. 2-1 | Exam. 2-2 | Exam. 2-3 | Exam. 2-4 |
|---|---|---|---|---|---|---|---|
| Main agent | (A) | (A1) | A1-1 | 45.50 | 40.32 | 40.12 | 40.12 |
| | | (A2) | A2-1 | - | - | - | - |
| | | | A2-2 | - | - | - | - |
| | (D) | | D-1 | 9.98 | 19.90 | 19.80 | 19.80 |
| Curing agent | (B) | (B1) | B1-1 | 44.32 | 39.28 | 39.08 | 39.08 |
| | (C) | (C1) | C1-3 | - | - | - | 0.50 |
| | | (C2) | C2-1 | 0.20 | 0.50 | 1.00 | 0.50 |
| Presence or absence of exhibition of curability | | | | Present | Present | Present | Present |
| Presence or absence of Liquid component upon light irradiation | | | | Present | Present | Present | Present |

**Table 3**

| | | | | Exam. 3-1 | Exam. 3-2 | Exam. 3-3 | Exam. 3-4 | Exam. 3-5 | Exam. 3-6 | Exam. 3-7 | Exam. 3-8 | Exam. 3-9 | Exam. 3-10 |
|---|---|---|---|---|---|---|---|---|---|---|---|---|---|
| Main agent | (A) | (A1) | A1-1 | 40.49 | 45.55 | 28.00 | 40.40 | 45.46 | 27.95 | 48.08 | 47.07 | 51.41 | 47.69 |
| | | (A2) | A2-1 | - | - | - | - | - | - | - | - | - | - |
| | | | A2-2 | - | - | 3.11 | - | - | 3.11 | - | - | - | - |
| | (D) | | D-1 | 19.98 | 9.99 | 9.99 | 19.94 | 9.97 | 9.97 | 5.00 | 6.99 | 9.99 | 9.99 |
| Curing agent | (B) | (B1) | B1-1 | 39.43 | 44.36 | 58.79 | 39.35 | 44.27 | 58.68 | 46.83 | 45.84 | 38.50 | 42.22 |
| | (C) | (C3) | C3-1 | 0.10 | 0.10 | 0.10 | 0.30 | 0.30 | 0.30 | 0.10 | 0.10 | 0.10 | 0.10 |
| Presence or absence of exhibition of curability | | | | Present | Present | Present | Present | Present | Present | Present | Present | Present | Present |
| Presence or absence of liquid component upon light irradiation | | | | Present | Present | Present | Present | Present | Present | Present | Present | Present | Present |

As shown in Table 1, Table 2, and Table 3, it was made clear that cured products of adhesive compositions can be produced by using the adhesive sets of Examples 1-1 to 1-6, Examples 2-1 to 2-4, and Examples 3-1 to 3-10. Furthermore, as shown in Table 1, Table 2, and Table 3, it was made clear that the cured products of the adhesive compositions exhibit photo-fusibility. From these results, it was verified that the adhesive set of the present disclosure allows a cured product of an adhesive composition exhibiting photo-fusibility to be obtained.

### [Evaluation of curing time]

Evaluation of the curing time was carried out by using the adhesive sets of Examples 1-4 and 2-2 to 2-4. A produced main agent and a produced curing agent were stirred for one minute by using a spatula, subsequently the mixture was left to stand at room temperature (25°C), and the adhesive composition was lifted with a spatula every 5 minutes. When the adhesive composition was not lifted, the adhesive composition was considered to be "cured", and curability of the adhesive composition was evaluated by designating the time taken to this time point as the curing time. The results are shown in Table 4.

**Table 4**

| | | | | Exam. 1-4 | Exam. 2-2 | Exam. 2-3 | Exam. 2-4 |
|---|---|---|---|---|---|---|---|
| Main agent | (A) | (A1) | A1-1 | 40.45 | 40.32 | 40.12 | 40.12 |
| | | (A2) | A2-1 | - | - | - | - |
| | | | A2-2 | - | - | - | - |
| | (D) | | D-1 | 19.96 | 19.90 | 19.80 | 19.80 |
| Curing agent | (B) | (B1) | B1-1 | 39.39 | 39.28 | 39.08 | 39.08 |
| | (C) | (C1) | C1-1 | 0.20 | - | - | - |
| | | | C1-3 | - | - | - | 0.50 |
| | | (C2) | C2-1 | 0.20 | 0.50 | 1.00 | 0.50 |
| Curing time (min) | | | | 5 | 60 | 60 | 60 |

As shown in Table 4, it was made clear that in a case where the adhesive sets of Examples 2-2 to 2-4 in which the curing catalyst was a tin-based curing catalyst were used, the curing time at the time producing a cured product of an adhesive composition was long, as compared to a case where the adhesive set of Example 1-4 in which the curing catalyst was not a tin-based curing catalyst was used.

### [Evaluation of adhesive strength of adhesive composition]

Evaluation of the adhesive strength of an adhesive composition was carried out by using the adhesive sets of Examples 1-4, 3-2, 3-4, and 3-5. The adhesive strength of an adhesive composition was evaluated by measuring the 90° peel strength. An adhesive composition obtained by stirring a produced main agent and a produced curing agent for one minute by using a spatula was disposed on a glass substrate on which a spacer having a height of 150 µm was provided at both ends. Next, while a PET film was covered on the disposed adhesive composition, the adhesive composition was spread over the entire glass substrate by using a ruler, and a laminated body for measurement composed of a glass substrate, an adhesive composition layer (thickness: 150 µm), and a PET film was obtained. At this time, the width of the adhesive composition layer of the laminated body for measurement was set to 25 mm. The PET film was pulled from the measurement sample by using a tensile testing machine (manufactured by SHIMADZU CORPORATION, AUTOGRAPH "AGS-1000"), and the peel strength of the adhesive composition layer with respect to the glass substrate was measured. The measurement conditions were set to a tensile angle of 90° and a tensile rate of 300 mm/min. The results are shown in Table 5.

**Table 5**

| | | | | Exam. 1-4 | Exam. 3-2 | Exam. 3-4 | Exam. 3-5 |
|---|---|---|---|---|---|---|---|
| Main agent | (A) | (A1) | A1-1 | 40.45 | 45.55 | 40.40 | 45.46 |
| | | (A2) | A2-1 | - | - | - | - |
| | | | A2-2 | - | - | - | - |
| | (D) | | D-1 | 19.96 | 9.99 | 19.94 | 9.97 |
| Curing agent | (B) | (B1) | B1-1 | 39.39 | 44.36 | 39.35 | 44.27 |
| | (C) | (C1) | C1-1 | 0.20 | - | - | - |
| | | (C3) | C3-1 | - | 0.10 | 0.30 | 0.30 |
| Peel strength (90°)(N/25mm) | | | | 1.67 | 12.00 | 11.98 | 11.53 |

As shown in Table 5, it was made clear that in a case where the adhesive sets of Examples 3-2, 3-4, and 3-5, in which the curing catalyst was a zirconium-based curing catalyst, were used, the adhesive strength of the adhesive composition was high as compared with the case in which the adhesive set of Example 1-4 in which the curing catalyst was not a tin-based curing catalyst was used.

### Industrial Applicability

According to the present disclosure, there is provided an adhesive set, with which a cured product of an adhesive composition exhibiting photo-fusibility can be obtained. With the adhesive sets of some embodiments, the time required until the adhesive composition is cured can be made longer. Furthermore, with the adhesive sets of some embodiments, an adhesive composition exhibiting higher adhesive strength can be prepared. Furthermore, according to the present disclosure, a film exhibiting photo-fusibility is provided. In addition, according to the present disclosure, there are provided a bonded body obtained by using such an adhesive set, and an adherend separation method for separating an adherend from a bonded body.

## Claims

1. An adhesive set comprising:
a main agent comprising a compound having two or more isocyanate groups; and
a curing agent comprising a compound having two or more hydroxyl groups,
wherein at least one of the compound having two or more isocyanate groups and the compound having two or more hydroxyl groups has one or more disulfide bond(s) in a molecule,
at least one of the main agent and the curing agent further comprises a curing catalyst, and
at least one of the main agent and the curing agent further comprises a photoradical generator.

2. The adhesive set according to claim 1,
wherein the curing catalyst is a tin-based curing catalyst.

3. The adhesive set according to claim 1,
wherein the curing catalyst is a zirconium-based curing catalyst.

4. A film comprising a cured product of an adhesive composition comprising the main agent and the curing agent in the adhesive set according to any one of claims 1 to 3.

5. A film comprising:
a polymer comprising a monomer unit having two or more isocyanate groups and a monomer unit having two or more hydroxyl groups; and
a photoradical generator,
wherein at least one of the monomer unit having two or more isocyanate groups and the monomer unit having two or more hydroxyl groups has one or more disulfide bond(s) in a molecule.

6. A bonded body comprising:
a first adherend;
a second adherend; and
an adhesive layer adhering the first adherend and the second adherend to each other,
wherein the adhesive layer comprises a cured product of an adhesive composition comprising the main agent and the curing agent in the adhesive set according to any one of claims 1 to 3.

7. An adherend separation method for separating an adherend from the bonded body according to claim 6, the adherend separation method comprising irradiating the adhesive layer of the bonded body with light and then separating the first adherend and the second adherend.

## Patentansprüche

1. Haftmittel-Set, umfassend:
ein Hauptmittel, umfassend eine Verbindung mit zwei oder mehreren Isocyanatgruppen; und
ein Härtungsmittel, umfassend eine Verbindung mit zwei oder mehreren Hydroxylgruppen,
wobei mindestens eine von der Verbindung mit zwei oder mehreren Isocyanatgruppen und der Verbindung mit zwei oder mehreren Hydroxylgruppen eine oder mehrere Disulfidbindung(en) in einem Molekül aufweist,
mindestens eines von dem Hauptmittel und dem Härtungsmittel weiter einen Härtungskatalysator umfasst, und
mindestens eines von dem Hauptmittel und dem Härtungsmittel weiter einen Fotoradikalerzeuger umfasst.

2. Haftmittel-Set nach Anspruch 1,
wobei der Härtungskatalysator ein auf Zinn basierender Härtungskatalysator ist.

3. Haftmittel-Set nach Anspruch 1,
wobei der Härtungskatalysator ein auf Zirkonium basierender Härtungskatalysator ist.

4. Folie, umfassend ein gehärtetes Produkt einer Haftmittelzusammensetzung, umfassend das Hauptmittel und das Härtungsmittel in dem Haftmittel-Set nach einem der Ansprüche 1 bis 3.

5. Folie, umfassend:
ein Polymer, umfassend eine Monomereinheit mit zwei oder mehreren Isocyanatgruppen und eine Monomereinheit mit zwei oder mehreren Hydroxylgruppen; und
einen Fotoradikalerzeuger,
wobei mindestens eine von der Monomereinheit mit zwei oder mehreren Isocyanatgruppen und der Monomereinheit mit zwei oder mehreren Hydroxylgruppen eine oder mehrere Disulfidbindung(en) in einem Molekül aufweist.

6. Verbundener Körper, umfassend:
ein erstes Fügeteil;
ein zweites Fügeteil; und
eine Haftmittelschicht, die das erste und das zweite Fügeteil aneinanderhaftet,
wobei die Haftmittelschicht ein gehärtetes Produkt einer Haftmittelzusammensetzung umfasst, die das Hauptmittel und das Härtungsmittel in dem Haftmittel-Set nach einem der Ansprüche 1 bis 3 umfasst.

7. Fügeteiltrennungsverfahren zum Trennen eines Fügeteils von dem verbundenen Körper nach Anspruch 6, wobei das Fügeteiltrennungsverfahren das Bestrahlen der Haftmittelschicht des verbundenen Körpers mit Licht und dann das Trennen des ersten Fügeteils und des zweiten Fügeteils umfasst.

## Revendications

1. Ensemble adhésif comprenant :
un agent principal comprenant un composé ayant deux ou plusieurs groupes isocyanates ; et
un agent de durcissement comprenant un composé ayant deux ou plusieurs groupes hydroxyles,
dans lequel au moins l'un parmi le composé ayant deux ou plusieurs groupes isocyanates et le composé ayant deux ou plusieurs groupes hydroxyles a une ou plusieurs liaison(s) disulfure dans une molécule,
au moins l'un parmi l'agent principal et l'agent de durcissement comprend en outre un catalyseur de durcissement, et
au moins l'un parmi l'agent principal et l'agent de durcissement comprend en outre un générateur photoradicalaire.

2. Ensemble adhésif selon la revendication 1,
dans lequel le catalyseur de durcissement est un catalyseur de durcissement à base d'étain.

3. Ensemble adhésif selon la revendication 1,
dans lequel le catalyseur de durcissement est un catalyseur de durcissement à base de zirconium.

4. Film comprenant un produit durci d'une composition adhésive comprenant l'agent principal et l'agent de durcissement dans l'ensemble adhésif selon l'une quelconque des revendications 1 à 3.

5. Film comprenant :
un polymère comprenant une unité monomère ayant deux ou plusieurs groupes isocyanates et une unité monomère ayant deux ou plusieurs groupes hydroxyles ; et
un générateur photoradicalaire,
dans lequel au moins l'une parmi l'unité monomère ayant deux ou plusieurs groupes isocyanates et l'unité monomère ayant deux ou plusieurs groupes hydroxyles a une ou plusieurs liaison(s) disulfure dans une molécule.

6. Corps collé comprenant :
un premier adhérent ;
un second adhérent ; et
une couche adhésive collant le premier adhérent et le second adhérent l'un à l'autre,
dans lequel la couche adhésive comprend un produit durci d'une composition adhésive comprenant l'agent principal et l'agent de durcissement dans l'ensemble adhésif selon l'une quelconque des revendications 1 à 3.

7. Procédé de séparation d'adhérents pour séparer un adhérent du corps collé selon la revendication 6, le procédé de séparation d'adhérents comprenant l'irradiation de la couche adhésive du corps collé avec de la lumière, puis la séparation du premier adhérent et du second adhérent.
